# EUROPÄISCHE PATENTSCHRIFT

(11) **EP 0 430 117 B1**
(45) Veröffentlichungstag und Bekanntmachung des Hinweises auf die Patenterteilung: **22.06.1994**
(21) Anmeldenummer: 90122472.5
(22) Anmeldetag: 26.11.1990
(51) Int. Cl.: F16L 55/165

(54) **Verfahren und Vorrichtung zum Verlegen und Positionieren eines Rohres in eine bestehende Rohrleitung**
Apparatus and method for laying and positioning a pipe in an existing conduit
Méthode et dispositif de pose et mise en place d'un tuyau dans un tuyau existant

(30) Priorität: 27.11.1989 CH 4240/89
(43) Veröffentlichungstag der Anmeldung: 05.06.1991
(73) Patentinhaber: ERSAG Systeme AG, CH-8706 Meilen (CH); SOCIETE ETEX, F-75008 Paris (FR); REDCO N.V., 1880 Kapelle op den Bos (BE)
(72) Erfinder: Hirsiger, Peter, CH-7320 Sargans (CH)
(74) Vertreter: Troesch Scheidegger Werner AG

(56) Entgegenhaltungen:
- EP-A- 0 082 223
- EP-A- 0 350 802
- WO-A-88/01707
- WO-A-89/04435
- WO-A-90/12242

## Beschreibung

Die vorliegende Erfindung betrifft ein Verfahren zum Verlegen und Positionieren eines Rohres in eine bestehende Rohrleitung, bei welchem der Ringraum zwischen der bestehenden äusseren Rohrleitung und dem darin eingebrachten inneren Rohr mit einem äushärtbaren Material verdämmt wird sowie eine Vorrichtung zur Durchführung des Verfahrens.

Das Verfahren eignet sich insbesondere für die sogenannte Rohrsanierungstechnik, bei welcher in ein zu sanierendes Rohr, bzw. eine zu sanierende bestehende Rohrleitung ein neues Rohr eingebracht wird. Das neue Rohr wird dabei oft am Ort durch Aufwickeln eines Kunststoffbandes zu einem Wickelrohr erstellt und dabei gleichzeitig in die zu sanierende Rohrleitung eingetrieben. Damit ein neues Rohr überhaupt in die bestehende Rohrleitung eingebracht werden kann, weist das neue Rohr einen geringeren Aussendurchmesser auf als der Innendurchmesser des alten Rohres, bzw. der bestehenden Rohrleitung. Bei dieser Technik ist es in der Regel erforderlich, den Ringraum zwischen der bestehenden Rohrleitung und dem darin eingebrachten neuen Rohr mit einem aushärtbaren Material (Dämmbaustoffe) auszufüllen.

Im Zusammenhang mit Rohrnetzsanierungen stellt sich bei der Injektion bzw. dem Verfüllen des Ringraumes mit Dämmbaustoffen immer wieder das Problem der Positionierung des neuen Rohres im Innern der bestehenden Rohrleitung, wobei in der Regel versucht wird, das neue Rohr auf der Sohle der bestehenden Rohrleitung zu Positionieren. Bei der Verwendung von Dämmbaustoffen mit einem spezifischen Gewicht >1,0 bewirken die natürlichen Auftriebskräfte ein Aufschwimmen des neu eingebrachten Rohres an den Rohrscheitel des alten Rohres bzw. der bestehenden Rohrleitung. Da einerseits minimale Gefällsverhältnisse ein Aufschwimmen nicht zulassen, andererseits ein solches grössere Gerinneanpassungsarbeiten zur Folge hat, sollte ein solches Aufschwimmen unbedingt vermieden werden.

Eine solche bekannte Rohrleitungssanierung ist z.B. aus EP-A-0 350 802 (am 17.01.90 veröfftlicht) oder EP-A-0 082 223 ersichtlich.

Eine davon abweichende Art der Rohrleitungssanierung ergibt sich aus WO-A-88/01707, gemäss welcher ein aus Glasfasermaterial bestehendes Renovationsrohr, getränkt mit erhärtbarem Kunststoffmaterial mittels eines aufweitbaren Schlauches gegen die Innenwand der bestehenden Rohrleitung angelegt und solange gehalten wird, bis das Renovationsrohr ausgehärtet ist. In diesem Fall entsteht kein zu verdämmender Zwischenraum. Der aufweitbare Schlauch wird wieder entfernt.

Zweck der vorliegenden Erfindung ist nun, ein Verfahren zum Verlegen und Positionieren eines neuen Rohres in einer bestehenden Rohrleitung zu finden, welches das neue Rohr in einer gewünschten Stellung festhält und dabei beispielsweise das genannte Aufschwimmen verhindert, bzw. diesem entgegenwirkt.

Die gestellte Aufgabe wird erfindungsgemäss dadurch gelöst, dass vor oder nach dem Einbringen des inneren Rohres ein sich über einen Teil des Rohrumfanges und im wesentlichen über die Länge der äusseren Rohrleitung erstreckender, aufweitbarer Schlauch eingebracht wird, dass nach dem Einbringen des Rohres und des Schlauches letzterer mit einem erhärtbaren Fliessmaterial gefüllt und damit aufgeweitet wird, bis das innere Rohr in der äusseren Rohrleitung in der dadurch zwangsläufig eingenommenen Lage festgehalten wird, und dass schliesslich das Verdämmaterial in den verbleibenden Ringraum zwischen äusserer Rohrleitung und innerem Rohr eingebracht wird.

Vorzugsweise wird dabei der aufweitbare Schlauch erst nach dem Einbringen des inneren Rohres in den Ringraum eingebracht, z.B. indem der Schlauch mittels eines Seils eingezogen wird. In der Regel wird der Schlauch im Scheitel des Ringraumes eingebracht, damit das neue Rohr auf der Sohle des bestehenden Rohres gehalten wird. Grundsätzlich ist es allerdings denkbar, das neue Rohr an irgend einer Stelle gegen die Wand des äusseren Rohres zu halten.

Vorzugsweise wird nach dem Einfüllen des Fliessmaterials in den, Schlauch das Material wenigstens teilweise zum Aushärten gebracht und erst anschliessend das Verdämmmaterial in den Ringraum eingefüllt.

Die ebenfalls Gegenstand der Erfindung bildende Vorrichtung zur Durchführung des Verfahrens ist durch die Merkmale des Anspruchs 5 definiert.

Der Schlauch ist vorzugsweise als Textilschlauch ausgebildet, welcher zwar Wasser durchlässt, für die Feststoffe des Fliessmaterials aber als Filter bzw. Sperre wirkt.

Es sind vorzugsweise Mittel vorgesehen, um eine Zugeinrichtung am Schlauch anzukuppeln, um den Schlauch in den Ringraum einzuziehen.

Die Positionierungsvorrichtung in Form eines Schlauches weist naturgemäss eine grosse Flexibilität auf, was wiederum eine gute Anpassungsfähigkeit an Unregelmässigkeiten in der anliegenden Oberflächenstruktur, bzw. an die Form der anliegenden Oberfläche schlechthin bedeutet, und sie weist eine hohe Rissfestigkeit und ein geringes Gewicht auf.

Es hat sich gezeigt, dass insbesondere ein Textilschlauch geeignet ist, die geforderten Bedingungen zu erfüllen und dazu beizutragen vermag, das Verfahren durchzuführen, d.h. ein neues Rohr im Innern einer bestehenden Rohrleitung in einer gewünschten Stellung festzuhalten (z.B. ein Aufschwimmen zu verhindern) und insgesamt dazu beiträgt, den gesamten Ablauf des Verfahrens zu vereinfachen.

Die Erfindung wird nachstehend anhand eines Ausführungsbeispieles und der Zeichnungen noch etwas näher erläutert. Es zeigt:
Fig. 1 einen Querschnitt durch ein in eine bestehende Rohrleitung auf deren Sohle abgestelltes neues Rohr sowie einen im Scheitel des Ringraumes zwischen den beiden Rohren angeordneten Positionierungsschlauch;
Fig. 2 eine der Fig. 1 entsprechende Anordnung, bei welcher der zwei Längskammern aufweisende Schlauch mit einem härtbaren Fliessmaterial aufgeweitet ist und dabei das innere Rohr in der gezeigten Stellung festhält;
Fig. 3 eine schematische Draufsicht auf einen zwei Kammern aufweisenden Positionierungsschlauch, und
Fig. 4 einen Querschnitt entlang der Linie IV-IV durch den Schlauch nach Fig. 3, in vergrössertem Massstab.

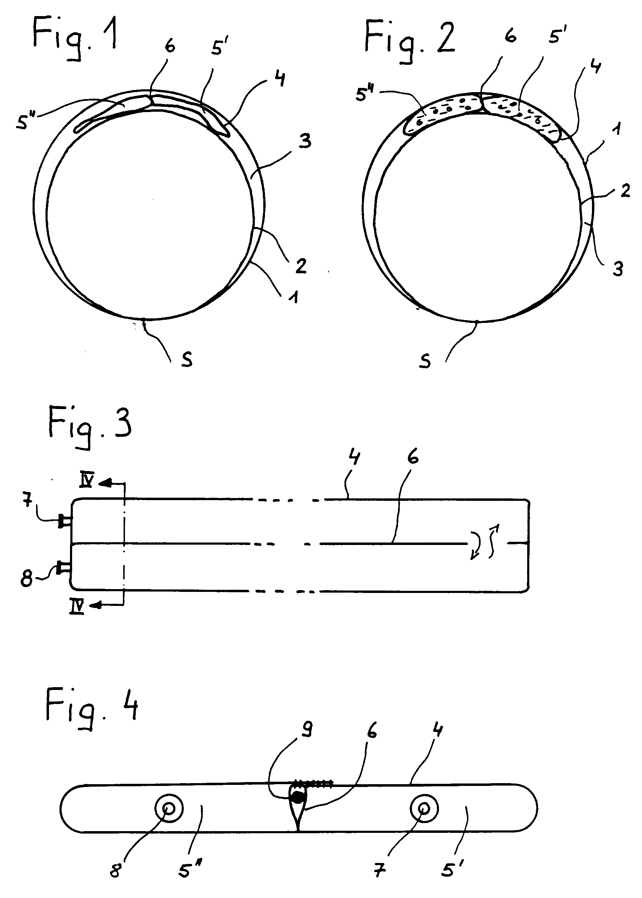

Die Figuren 1 und 2 der Zeichnung zeigen rein schematisch und im Querschnitt eine bestehende Rohrleitung 1, auf deren Sohle S ein neues Rohr bzw. ein Renovationsrohr 2 abgestützt ist. Im Ringraum 3 zwischen der Rohrleitung 1 und dem neuen Rohr 2, und zwar am Scheitel, ist ein aufweitbarer Schlauch 4 eingelegt. Dieser Schlauch 4 weist zwei Längskammern 5',5'', welche durch einen Trennsteg 6 voneinander getrennt sind, auf.

Es handelt sich dabei vorzugsweise um einen Textilschlauch, welcher einerseits wasserdurchlässig ist und andererseits die Feststoffe des einzufüllenden Fliessmaterials zurückhält.

Der zwei Kammern aufweisende Schlauch 4 wird vorzugsweise aus einem Stück hergestellt, wobei die Längsränder einer entsprechenden Textilbahn sich in der Mitte überlappen, abgesteppt sind und dabei gegebenenfalls durch diese Absteppung gleichzeitig die Kammertrennwand 6 erstellt wird. Dies ist in Fig. 4 gezeigt. Figur 3 zeigt darüberhinaus einen Einfüllstutzen 7 und einen Entlüftungsstutzen 8, wobei die beiden Kammern 5',5'' mindestens am Ende des Schlauches miteinander kommunizieren, damit das einzufüllende Fliessmaterial von einer Kammer in die andere treten kann.

Figur 2 zeigt eine ähnliche Ansicht wie Fig. 1, wobei hier der Schlauch 4 bzw. dessen Kammern 5',5'' mit einem erhärtbaren Fliessmaterial gefüllt und aufgeweitet ist. Damit wird das auf der Sohle S aufliegende innere Rohr 2 in der gezeigten Lage festgehalten bzw. durch den aufgeweiteten Schlauch in der gezeigten Lage verkeilt.

Vorzugsweise wird nun das erhärtbare, in die Kammern 5',5'' eingefüllte Fliessmaterial mindestens teilweise zum Erhärten gebracht, um die beabsichtigte Wirkung des Schlauches auf jeden Fall zu garantieren. Die Positionierung des inneren Rohres 2 durch den aufgeweiteten Schlauch mag auch dann schon sichergestellt sein, wenn das in den Schlauch eingebrachte Fliessmaterial noch nicht erhärtet ist.

Nachdem das innere Rohr auf die vorbeschriebene Weise positioniert und festgehalten ist, kann der restliche Teil des Ringraumes 3 in der üblichen Weise mit Verdämmaterial ausgefüllt werden (z.B. durch Injektion).

Je nach Bauweise wird vor oder nach dem Einbringen des neuen Rohres 2 der wasserdurchlässige Textilschlauch 4 in den Ringraum 3, vorzugsweise in den Rohrscheitel eingezogen. Durch beispielsweise das Einziehen des Schlauches, was einem Spannvorgang gleichkommt, wird der Schlauch 4 automatisch im Rohrscheitel positioniert. Nach dem Einbringen des neuen Rohres 2 wird der Schlauch 4 mit einem aushärtbaren Fliessmaterial (Fliessdämmer) ausinjiziert. Während dieses Vorganges kann überschüssiges Anmachwasser aus dem Schlauch austreten. Ein Ausfliessen der Feststoffe des Dämmaterials wird durch die Filterwirkung des Textilgewebes verhindert. Mit dem Füllvorgang passt sich der Schlauch 4 dank seiner Flexibilität seiner Umgebung an (wie z.B. Muffenversätze, Scherbenbildungen etc.). Vorzugsweise erst nach dem Aushärten des Fliessmaterials im Innern des Schlauches 4 kann der Rest des Ringraumes 3 nun verfüllt werden, wobei der vorzugsweise im Scheitel eingebrachte Schlauch als Distanzhalter wirken kann und dabei ein Aufschwimmen des neuen Rohres verhindert.

Wie aus Fig. 4 hervorgeht, kann im Trennsteg 6 des Schlauches ein Stahlseil 9 eingelegt sein, welches gleichzeitig als Zugvorrichtung zum Einziehen des Schlauches 4 dient.

## Patentansprüche

1. Verfahren zum Verlegen und Positionieren eines Rohres in eine bestehende Rohrleitung, bei welchem der Ringraum zwischen der bestehenden äusseren Rohrleitung und dem darin eingebrachten inneren Rohr mit einem aushärtbaren Material verdämmt wird, dadurch gekennzeichnet, dass vor oder nach dem Einbringen des inneren Rohres ein sich über einen Teil des Rohrumfanges und im wesentlichen über die Länge der äusseren Rohrleitung erstreckender aufweitbarer Schlauch eingebracht wird, dass nach dem Einbringen des Rohres und des Schlauches letzterer mit einem erhärtbaren Fliessmaterial gefüllt und damit aufgeweitet wird, bis das innere Rohr in der äusseren Rohrleitung in der dadurch zwangsläufig eingenommenen Lage festgehalten wird, und dass schliesslich das Verdämmungsmaterial in den verbleibenden Ringraum zwischen äusserer Rohrleitung und innerem Rohr eingebracht wird.

2. Verfahren nach Anspruch 1, dadurch gekennzeichnet, dass der aufweitbare Schlauch erst nach dem Einbringen des inneren Rohres in den Ringraum eingebracht, z.B. eingezogen wird.

3. Verfahren nach Anspruch 1 oder 2, dadurch gekennzeichnet, dass der Schlauch im Scheitel des Ringraumes eingebracht wird.

4. Verfahren nach einem der Ansprüche 1-3, dadurch gekennzeichnet, dass nach dem Einfüllen des Fliessmaterials in den Schlauch das Fliessmaterial wenigstens teilweise zum Aushärten gebracht und erst anschliessend das Verdämmaterial in den Ringraum eingebracht wird.

5. Vorrichtung zur Durchführung des Verfahrens nach einem der Ansprüche 1-4, bestehend aus einem flexiblen Schlauch mit Füll- und Entlüftungsöffnungen, dadurch gekennzeichnet, dass der Schlauch mittels einer längsverlaufenden Trennstelle, z.B. einer Längsnaht, in zwei Längskammern unterteilt ist, welche gegebenenfalls an vorbestimmten Stellen miteinander kommunizieren, wobei durch diese Trennung ein Sattel gebildet ist.

6. Vorrichtung nach Anspruch 5, dadurch gekennzeichnet, dass der Schlauch als Textilschlauch ausgebildet ist, welcher Wasser durchlässt, für die Feststoffe des Fliessmaterials aber als Sperre wirkt.

7. Vorrichtung nach einem der Ansprüche 5 und 6, dadurch gekennzeichnet, dass wenigstens an einem Schlauchende Mittel vorgesehen sind, um eine Zugeinrichtung anzukuppeln.

## Claims

1. A process for laying and positioning a pipe in an existing pipe duct, in which the annular space between the existing outer pipe duct and the inner pipe brought into it is dammed with a hardenable material, characterised in that before or after bringing in the inner pipe an expandable hose is introduced, the hose extending over a part of the periphery of the pipe and essentially over the length of the outer pipe duct, in that after bringing in the pipe and the hose the latter is filled with a hardenable flowable material and expanded thereby until the inner pipe is held fast in the outer pipe duct in the position that it was forced to assume, and in that finally the damming material is brought into the remaining annular space between the outer pipe duct and the inner pipe.

2. A process according to claim 1, characterised in that the expandable hose is brought, e.g. pulled, in only after introducing the inner pipe into the annular space.

3. A process according to claim 1 or claim 2, characterised in that the hose is brought into the crown of the annular space.

4. A process according to any of claims 1 to 3, characterised in that after filling the flowable material into the hose the flowable material is brought at least partly to a hardened state and the damming material is brought into the annular space only thereafter.

5. Apparatus for carrying out the process according to any one of claims 1 to 4, comprising a flexible hose with filling and venting openings, characterised in that the hose is divided by means of a longitudinally extending separation location, eg a longitudinal seam, into two longitudinal chambers which in given cases communicate with each other at predetermined locations, wherein a saddle is formed by this separation.

6. Apparatus according to claim 5, characterised in that the hose is formed as a textile hose which is water-permeable but works as a block for the solid content of the flowable material.

7. Apparatus according to either of claims 5 or 6, characterised in that means are provided at least one hose end for coupling a pulling device thereto.

## Revendications

1. Procédé pour poser et positionner un tuyau dans un conduit existant, dans le cadre duquel l'espace circulaire entre le conduit extérieur existant et le tuyau intérieur introduit dans celui-ci est bourré avec un matériau durcissable, caractérisé en ce qu'un tube flexible expansible s'étendant sur une partie de la circonférence du tuyau et principalement sur la longueur du conduit extérieur est introduit avant ou après l'introduction du tuyau intérieur, en ce qu'après l'introduction du tuyau et du tube flexible, ce dernier est rempli avec un matériau coulant durcissable et est ainsi élargi jusqu'à ce que le tuyau intérieur soit fixé dans le conduit extérieur dans la position obligatoirement prise de ce fait et en ce qu'enfin le matériau de bourrage est introduit dans l'espace circulaire restant entre le conduit extérieur et le tuyau intérieur.

2. Procédé selon la revendication 1, caractérisé en ce que le tube flexible expansible n'est introduit, par exemple inséré, dans l'espace circulaire qu'après l'introduction du tuyau intérieur.

3. Procédé selon la revendication 1 ou 2, caractérisé en ce que le tube flexible est introduit au sommet de l'espace circulaire.

4. Procédé selon une des revendications 1-3, caractérisé en ce qu'après le remplissage du tube flexible avec le matériau coulant, le matériau coulant est amené à durcir au moins partiellement et qu'ensuite seulement le matériau de bourrage est introduit dans l'espace circulaire.

5. Dispositif pour la mise en oeuvre du procédé selon une des revendications 1-4, constitué d'un tube flexible avec des ouvertures de remplissage et d'évacuation d'air, caractérisé en ce que le tube flexible est subdivisé au moyen d'une ligne de sectionnement longitudinale, par exemple une couture longitudinale, en deux chambres longitudinales, lesquelles communiquent le cas échéant entre elles en des points déterminés, une selle étant formée par cette division.

6. Dispositif selon la revendication 5, caractérisé en ce que le tube flexible se présente comme un tube flexible de textile, lequel laisse passer l'eau mais fait barrage aux substances solides du matériau coulant.

7. Dispositif selon une des revendications 5 et 6, caractérisé en ce que des moyens sont prévus au moins à une extrémité du tube flexible pour connecter un dispositif de traction.
